# EUROPÄISCHE PATENTSCHRIFT

(11) **EP 1 577 659 B1**
(45) Veröffentlichungstag und Bekanntmachung des Hinweises auf die Patenterteilung: **13.09.2006**
(21) Anmeldenummer: 04090113.4
(22) Anmeldetag: 18.03.2004
(51) Int. Cl.: G01N 3/32

(54) **Verfahren und Vorrichtung zur Ermittlung des Widerstandes von Blechen gegen Biegung mit wechselnder Belastungsrichtung**
Method and device for determining the resistance of sheet metal to alternating bending loads
Méthode et dispositif pour déterminer la résistance des tôles à des efforts de flexion alternés

(43) Veröffentlichungstag der Anmeldung: 21.09.2005
(73) Patentinhaber: INPRO Innovationsgesellschaft für fortgeschrittene Produktionssysteme in der Fahrzeugindustrie mbH, 10587 Berlin (DE)
(72) Erfinder: Kraska, Martin, Dr., 14558 Bergholz-Rehbrücke (DE)
(74) Vertreter: Hoffmann, Klaus-Dieter

(56) Entgegenhaltungen:
- FR-A- 2 843 633
- US-A- 2 724 265
- BRUNET M ET AL: "NONLINEAR KINEMATIC HARDENING IDENTIFICATION FOR ANISOTROPIC SHEET METALS WITH BENDING-UNBENDING TESTS" TRANSACTIONS OF THE ASME. JOURNAL OF ENGINEERING MATERIALS AND TECHNOLOGY, AMERICAN SOCIETY OF MECHANICAL ENGINEERS,, US, Bd. 123, Nr. 4, Oktober 2001 (2001-10), Seiten 378-383, XP001149898 ISSN: 0094-4289
- LEONARD T ET AL: "AN INVESTIGATION INTO DMTA CLAMPING PROBLEMS" MEASUREMENT SCIENCE AND TECHNOLOGY, IOP PUBLISHING, BRISTOL, GB, Bd. 3, Nr. 3, 1. März 1992 (1992-03-01), Seiten 275-282, XP000294615 ISSN: 0957-0233
- YOSHIDA F ET AL: "IDENTIFICATION OF MATERIAL PARAMETERS IN CONSTITUTIVE MODEL FOR SHEET METALS FROM CYCLIC BENDING TESTS" INTERNATIONAL JOURNAL OF MECHANICAL SCIENCES, PERGAMON PRESS, OXFORD, GB, Bd. 40, Nr. 2-3, 1998, Seiten 237-249, XP002238174 ISSN: 0020-7403

## Beschreibung

Die Erfindung betrifft ein und eine Vorrichtung zur Ermittlung des Widerstandes von Blechen gegen Biegung mit wechselnder Belastungsrichtung, wobei eine aus mindestens einem Blechstreifen gebildete Biegeprobe an beiden Enden in Einspannungen (Spannbacken) fixiert und durch relative Verschiebung der Einspannungen verformt wird, Meßwerte zur Erstellung der entsprechenden Kraft-Verschiebungs-Kurve erfaßt und die Verformung mit einem geeigneten Berechnungsverfahren derart simuliert wird, daß die verwendeten Materialparameter anhand der Übereinstimmung von gemessener und gerechneter Kraft-Verschiebungs-Kurve beurteilt werden können.

Um näher an die Problematik der Wechselbiegung beim Matrizeneinlauf von Platinen heranzukommen und einen gewissen Aussagewert für die kinematische Verfestigung bei der Wechselbiegung der Platinen zu erhalten, wird die Identifikation einer Versuchstechnik angestrebt, mit der routinemäßig der Bauschingereffekt von Blechwerkstoffen mit einer für Rückfederungsrechnungen ausreichenden Genauigkeit gemessen werden kann.

Als Bewertungskriterien für eine geeignete Versuchstechnik können demzufolge gelten:
- erreichbare Formänderung. Die erforderlichen Werte orientieren sich an den Einlaufradien und den eingesetzten Blechdicken.
- Komplexität der Versuchseinrichtung.
- Komplexität und Robustheit der Versuchsdurchführung. Der Versuch soll zuverlässig und kostengünstig in normal ausgestatteten Prüflabors durchführbar sein.
- Komplexität und Robustheit der Auswertung. Die Auswertung (Materialabgleich) muß weitgehend automatisierbar sein. Die Abgleichergebnisse dürfen nicht zu empfindlich auf Meßfehler reagieren.

Im Zusammenhang mit der Identifikation geeigneter Versuchstechnik werden in einschlägigen Fachkreisen sowohl Zug-Druck-Versuche als auch Biegeversuche diskutiert. Aus dem einachsigen Zug-Druck-Versuch lassen sich ebenso wie beim klassischen Zugversuch direkt Spannungs-Dehnungs-Daten ableiten, die dann konventionell ausgewertet werden können. Einachsige Zug-Druck-Versuche an Blechproben erfordern besondere Maßnahmen, um das Ausknicken der Probe bei Druck zu vermeiden Um die Knicklänge zu reduzieren, sind die Proben wesentlich kleiner als die Zugproben nach DIN EN 10002. Zusätzlich werden gegebenenfalls Knickstützen verwendet.

Biegeversuche haben den Vorteil, daß sie prinzipiell näher an dem eigentlich zu beherrschenden Umformproblem beim Matrizeneinlauf liegen. Sie erfordern jedoch zur ihrer Auswertung einen Abgleich mit integrierter Simulation, auch inverse Identifikation genannt.

Bekannt ist ein Wechselbiegeversuch (M.Brunet, F. Morestin und S. Godereaux: Nonlinear Kinematic Hardening Identification for Anisotropic Sheet Metals With Bending-Unbending Tests. Transactions of ASME 123 (October 2001) S. 378 ff.), bei dem ein Blechstreifen in einer Vorrichtung beidseitig eingespannt und querfrei gebogen wird, so daß über die ganze Länge ein konstantes Biegemoment vorliegt. Dieser Versuch wird zusammen mit Zugversuchsdaten als Grundlage für die Identifikation eines Materialmodells mit kinematischer Verformung diskutiert. Wie die Autoren selbst feststellen, tritt eine Querverwölbung des Probenquerschnitts infolge Querkontraktion auf. Dennoch wird für die Parameteridentifikation ein ebener Verzerrungszuzustand in Breitenrichtung angenommen, so daß ohne FEM-Rechnungen ausgekommen wird. Diese Annahme wird in nicht nachvollziehbarer Weise mit den beteiligten großen Verformungen gerechtfertigt.Die Krümmung erreicht 0,08/mm, was einem Biegeradius von 12,5 mm. Der Radius (Dicke der Spannbacken) ist konstruktionsmäßig nach unten beschränkt. Da die Spannbacken für Proben aus Stahl sehr viel dicker als das Probenmaterial sein müssen, sind die erreichbaren Umformgrade sehr gering.

Bekannt ist auch (T. Leonard et al: "An investigation into DMTA clamping problems" Measurement Science and Technology, IOP Publishing, Bristol, GB, Bd. 3, Nr. 3, 1. März 1992 (1992-03-01), Seiten 275-282), daß die Genauigkeit von Wechselbiegeversuchen damit erhöht werden kann, daß die Einspannungen relativ zueinander in Probenlängsrichtung frei bewegbar aufgebaut werden, und die Biegekräfte verdrehungsfrei durch reine Translation erfolgen.

Der Erfindung liegt die Aufgabe zugrunde, ein Verfahren und eine Vorrichtung der eingangs erwähnten Art zur Verfügung zu stellen, mit dem bzw. der auf einfache und kostengünstige Weise beim Biegen von Blechen mit wechselnder Belastungsrichtung eine optimale Bestimmung der das plastische Verfestigungsverhalten bestimmenden Materialkennwerte möglich ist. Hierbei soll insbesondere für eine Kompensation aller äußerer Biegemomente und Querkräfte gesorgt und die bisherige Notwendigkeit aufwendiger Justierarbeiten vermieden werden.

Diese Aufgabe wird erfindungsgemäße durch das gattungsgemäße Verfahren gelöst, das dadurch gekennzeichnet ist, daß
- die relative Bewegung der Einspannungen der Biegeprobe verdrehungsfrei durch reine Translation in einer von der Probenlängsrichtung und der Senkrechten auf der unverformten Blechstreifenoberfläche (Probennormale) aufgespannten Ebene erfolgt, indem die relative Verschiebung der Einspannungen senkrecht zur Blechstreifenoberfläche bewirkt wird, ohne daß eine relative Verschiebung der Einspannungen in Probenlängsrichtung behindert wird,
- die Verdrehungsfreiheit der Einspannungen durch Spiegelung des in letzteren fixierten Blechstreifens an zwei Ebenen realisiert wird, wobei die an den Einspannungen entstehenden Drehmomente sich gegenseitig kompensieren und die sich ergebende symmetrische Biegeprobe aus zwei identischen, parallel und im Abstand zueinander positionierten Blechstreifen gebildet wird, wobei die Einspannungen der Enden der beiden Blechstreifen starr miteinander verbunden, ansonsten aber frei schwebend gehalten werden und die Blechstreifen außerdem jeweils längsmittig zwischen ihren Enden getrennt eingespannt und ihre längsmittigen Einspannungen derart gehaltert werden, daß eine relative Bewegung senkrecht zur Blechstreifenoberfläche zwischen den Einspannungen aufgebracht wird,
- die in Richtung der Probenormalen vorgeschriebene Bewegung mindestens einmal im Laufe des Verfahrens ihre Richtung ändert und so ausreichend groß erfolgt, daß zumindest in einem Teil der Biegeprobe plastische Verformung mit mindestens einmal wechselnder Richtung bewirkt wird,
- die relative Verschiebung der Einspannungen und die die relative Verschiebung bewirkende Kraft über die gesamte Verfahrensdauer ohne Unterbrechung während eines Richtungswechsels der Bewegung aufgezeichnet werden,
- die Simulation des Biegeversuchs mit einem Finite-Elemente-Programm durchgeführt wird, indem die im Biegeversuch gemessene Verschiebung in Richtung der Probennormalen aufgebracht und die dafür erforderliche Kraft berechnet und mit der gemessenen Kraft-Verschiebungs-Kurve verglichen wird, und
- die in der Simulation verwendeten Materialkennwerte so variiert werden, daß die gemessene und die berechnete Kraft-Verschiebungs-Kurve annähernd zur Deckung kommen und somit die das plastische Verfestigungsverhalten bestimmenden Materialkennwerte ermittelt werden.

Vorteilhafterweise muß durch Ausnutzung der Symmetrie die Simulation der Biegeprobe nur für 1/8 der Biegeprobe durchgeführt geführt werden. Auch können für die Simulation der Biegeprobe Materialkennwerte verwendet werden, die zuvor mit konventionellen einachsigen Zugversuchen an Blechstreifen nach DIN EN 10002 unter Annahme verschiedener Parameter für kinematische Verfestigung abgeglichen wurden, wobei dann unter den so bestimmten unterschiedlichen Parametersätzen der beste Parametersatz anhand des Vergleichs zwischen simulierter und gemessener Kraft-Verschiebungs-Kurve an der Biegeprobe ausgewählt wird, so daß eine interative Simulation für den Parameterabgleich entfällt.

Geeigneterweise kann die zyklische Belastung der symmetrischen Biegeprobe über deren längsmittige Einspannungen mittels einer herkömmlichen Zugprüfmaschine erfolgen.

Die der Erfindung zugrunde liegende Aufgabe wird weiterhin durch eine gattungsgemäße Vorrichtung gelöst, die gekennzeichnet ist durch
- eine symmetrische Biegeprobe aus zwei identischen, parallel und im Abstand zueinander angeordneten Blechstreifen, deren Enden jeweils nicht drehbar in starr miteinander verbundenen und nur durch die Blechstreifen gehaltene Einspannungen (Spannbacken) eingespannt sind,
- zwei einander gegenüberliegend beabstandet und längsmittig zwischen den Enden der Blechstreifen angeordnete weitere Einspannungen (Spannbacken), in denen jeweils einer der Blechstreifen längsmittig eingespannt ist und die jeweils starr mit senkrecht zur Blechstreifenoberfläche sowie relativ zueinander zyklisch bewegbaren Halterungen verbunden sind,
- wobei die Aufbringung der Verformung in den vier freien Blechabschnitten ausschließlich infolge axialer Verschiebung der längsmittigen Einspannungen relativ zueinander gegeben ist und sich die Biegemomente in den Blechstreifen infolge der Symmetrie so kompensieren, daß die von den Halterungen der Biegeprobe aufzunehmenden Haltemomente und seitlichen Haltekräfte nur durch Abweichungen in der Probensymmetrie auftreten und daher gering sind,
- eine die Zugkraft- bzw. Druckkraftbeaufschlagung der Blechstreifen und deren Verschiebung messende Einrichtung zur Erstellung der Kraft-Verschiebungs-Kurve der Biegeprobe und
- einen unabhängig von der Biegeprobe vorgesehenen Rechner zur Simulation des Biegeversuchs und Berechnung der Parameter der Kraft-Verschiebungs-Kurve für nur 1/8 der Biegeprobe, die vom Rechner mit den diesem eingegebenen Parametern der gemessenen Kraft-Verschiebungs-Kurve zur Ermittlung verbesserter Materialparameter (der Auswirkung der Verfestigungsparameter) abgleichbar sind.

Geeigneter- und kostengünstigerweise sind die relativ zueinander zyklisch bewegbaren Halterungen, mit denen die die Blechstreifen längsmittig einspannenden und zueinander beabstandeten Einspannungen der zweifach symmetrischen Biegeprobe jeweils starr verbunden sind, sowie die die Kraft und Verschiebung der Biegeprobe messende Einrichtung Teil einer herkömmlichen Zugprüfmaschine.

Vorzugsweise können die freischwebend gehaltenen Einspannungen der zweifach symmetrischen Biegeprobe, in denen die Enden der übereinander angeordneten Blechstreifen beidseits eingespannt sind, jeweils von einem Oberteil und einem Unterteil, die spiegelbildlich gestaltet und im Abstand zu einander angeordnet sind, und von einem mindestens teilweise zwischen dem Ober- und dem Unterteil angeordneten Zwischenstück gebildet sein, wobei das Ober- und das Unterteil jeder Einspannung durch lösbare Stahlbolzen starr verbunden und die einander entsprechenden Enden der beiden Blechstreifen jeweils zwischen dem Zwischenstück und dem Oberteil bzw. dem Unterteil positioniert und nicht drehbar eingespannt sind.

Auch können die spiegelbildlichen gestalteten Ober- und Unterteile der freischwebend gehaltenen Einspannungen der zweifach symmetrischen Biegeprobe jeweils eine - gesehen im Schnitt durch die Mitte der Einspannung - senkrecht zur Oberfläche der Blechstreifen der Biegeprobe achsmittig verlaufende rechteckförmige Aussparung aufweisen, wobei die entsprechenden U-förmigen Aussparungen einander zugewandt sind und das Zwischenstück der jeweiligen Einspannung sich in die einander gegenüberliegenden rechteckförmige Aussparungen derart erstreckt, daß die jeweiligen Enden der Blechstreifen der Biegeprobe zwischen dem Boden der entsprechenden rechteckförmigen Aussparungen und der entsprechenden letzterem zugewandten Fläche des jeweiligen Zwischenstücks positioniert und nicht drehbar eingespannt sind, wobei die von einander beabstandet angeordneten Ober- und Unterteile jeder Einspannung durch zwei sich durch letztere parallel zum Zwischenstück der Einspannung erstreckende lösbare Stahlbolzen starr miteinander verbunden sind.

Bevorzugt bestehen die die Blechstreifen der zweifach symmetrischen Biegeprobe jeweils längsmittig einspannenden Einspannungen jeweils aus zwei übereinander angeordneten Stahlklötzen, von denen jeweils der Stahlklotz jeder Einspannung, der von der entsprechenden Halterung letzterer entfernt angeordnet ist, identisch wie das Unterteil bzw. das Oberteil der freischwebend gehalterten Einspannungen der Biegeprobe ausgebildet ist, wobei die beiden Stahlklötze durch Bolzen starr miteinander verbundenen sind und der der zur zugeordneten Halterung benachbarte Stahlklotz an letzterer starr und lösbar befestigt ist. Der zur entsprechenden Halterung entfernt angeordnete Stahlklotz jeder Einspannung - gesehen im Schnitt durch die Mitte der Einspannung - kann achsmittig eine rechteckförmige Ausnehmung aufweisen, auf deren Boden der entsprechende Blechstreifen der zweifach symmetrischen Biegeprobe positioniert und durch einen sich in die rechteckförmige Aussparung erstreckenden Schenkel des im Schnitt kreuzförmigen, zur entsprechenden Halterung benachbarter Stahlklotzes längsmittig festgelegt ist derart, daß er von letzterem entsprechend der zyklischen Relativbewegung der Halterungen der beiden den jeweiligen Blechstreifen der Biegeprobe längsmittig einspannenden Einspannungen mit der entsprechenden Zug- bzw. Druckkraft beaufschlagbar ist.

Die Erfindung wird nun anhand der Zeichnungen erläutert. In diesen sind:
**Fig. 1** eine Schnittansicht eines schematisch dargestellten Teils der Ausführungsform der Vorrichtung mit symmetrischer Biegeprobe nach Fig. 2, wobei der Teil der Biegeprobe mit einem Blechstreifen in seiner Ausgangslage (gestrichelte Linien) und seiner verformten Lage (durchgezogene Linien) dargestellt ist,
**Fig. 2** eine Schnittansicht der schematisch insgesamt dargestellten Ausführungsform der Vorrichtung unter Verwendung der symmetrischen Biegeprobe aus zwei identischen, parallel und im Abstand zueinander angeordneten Blechstreifen, dargestellt in deren Ausgangslage (gestrichelte Linien) und in deren verformter Lage (durchgezogene Linien),
**Fig. 3** eine Schnittansicht einer schematisch dargestellten herkömmlichen Zugprüfmaschine mit in dieser gehalterten symmetrischen Biegeprobe gemäß Fig. 2 in deren Ausgangslage,
**Fig. 4** eine Perspektivdarstellung einer schematischen Darstellung der eingespannten symmetrischen Biegeprobe nach Fig. 2 in deren Ausgangslage unter Herausstellung eines Achtels der Biegeprobe für deren Simulation,
**Fig. 5** eine Schnittdarstellung durch die außenseitige Einspannung der symmetrischen Biegeprobe nach Fig. 2,
**Fig. 6** eine Schnittdarstellung durch die längsmittigen Einspannungen der Biegeprobe nach Fig. 2,
**Fig. 7** eine schematische Schnittansicht durch die Biegeprobe nach Fig. 2 in deren Ausgangslage, wobei sämtliche Einspannungen der Biegeprobe und die Halterungen der längsmittigen Einspannungen der Biegeprobe gezeigt sind, und
**Fig. 8** eine Draufsicht der Darstellung nach Fig. 7.

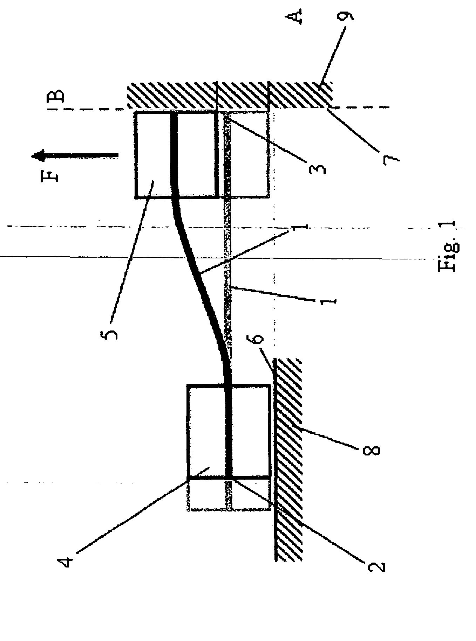

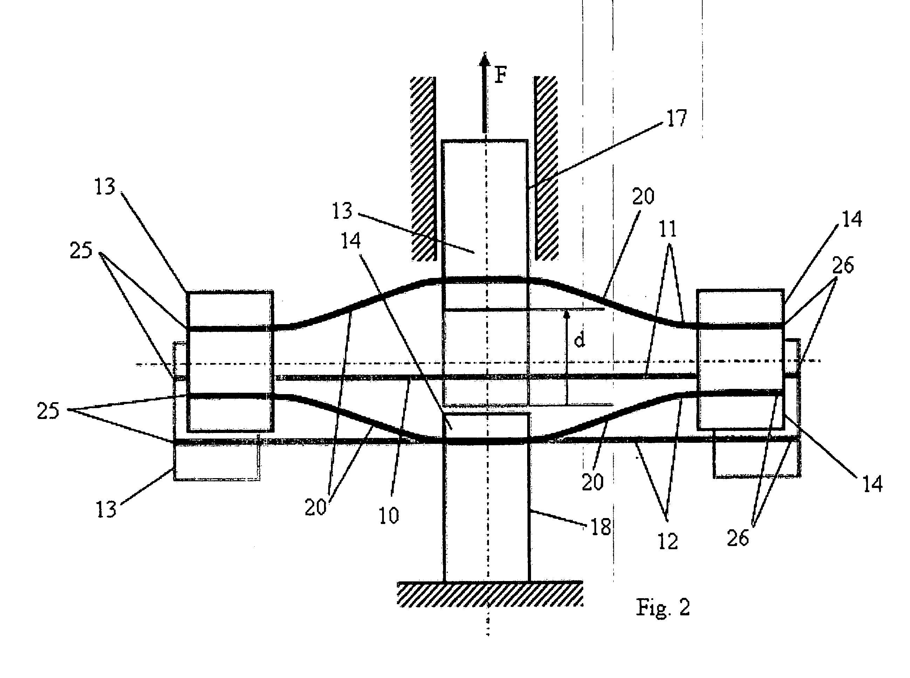

Gemäß Fig. 1 , die im Prinzip ein Viertel die Biegeprobe der Vorrichtung nach Fig. 2 zeigt, ist ein Blechstreifen 1 der Biegeprobe an beiden Enden 2 und 3 jeweils in einer Einspannung 4 bzw. 5 fixiert, die jeweils auf einer Führungsfläche 6 bzw. 7 einer Basis 8 bzw. 9 beweglich gelagert sind, wobei die Führungsflächen 6 und 7 in rechtwinklig zueinander angeordneten Ebenen A und B liegen. Der Blechstreifen 1 ist in seiner Ausgangslage, die in Fig. 1 gestrichelt dargestellt ist, in den Einspannungen 4 und 5 so fixiert, daß die Blechstreifenoberflächen 10 parallel zu der in Fig. 1 horizontal verlaufenden Führungsfläche 6 der Basis 8 angeordnet sind.

Der Blechstreifen 1 wird zur Ermittlung seines Widerstandes gegen Biegung mit wechselnder Belastungsrichtung durch relative Verschiebung seiner Einspannungen 4 und 5 verformt. Durch Aufbringen einer Kraft F in Richtung der Senkrechten auf der unverformten Blechstreifenoberfläche (Probennormalen) (Fig.1) wird die relative Verschiebung der Einspannungen 4 und 5 senkrecht zur Blechstreifenoberfläche 10 des Blechstreifens 1 bewirkt, ohne daß eine relative Verschiebung der Einspannungen 4 und 5 in Probenlängsrichtung behindert wird. Hierbei erfolgt die relative Bewegung der Einspannungen 4 und 5 des Blechstreifens 1 verdrehungsfrei durch reine Translation in einer von der Längsrichtung des Blechstreifens 1 und der Probennormalen aufgespannten Ebene. Die in Richtung der Probennormalen vorgeschriebene Bewegung wird mindestens einmal während des Versuchs in ihrer Richtung geändert und ausreichend groß gewählt, daß mindestens in einem Teil der Biegeprobe plastische Verformung mit mindestens einmal wechselnder Richtung bewirkt wird. Mittels einer in Fig. 1 nicht dargestellten Einrichtung werden die relative Verschiebung der Einspannungen 4 und 5 und die die relative Verschiebung bewirkende Kraft F über die gesamte Verfahrensdauer ohne Unterbrechung während eines Richtungswechsels der Bewegung aufgezeichnet, so daß insbesondere auch während des Richtungswechsels der Bewegung die Messung nicht unterbrochen wird.

Mit einem Finite-Elemente-Programm wird eine Simulation des Versuchs durchgeführt, so daß die im Versuch gemessene Bewegung in Richtung der Probennormalen aufgebracht und die dafür erforderliche Kraft berechnet und mit der gemessenen Kraft-Verschiebungs-Kurve verglichen wird. Die in der Simulation verwendeten Materialkennwerte werden so variiert, daß die gemessene und die berechnete Kraft-Verschiebungs-Kurven möglichst gut zur Deckung kommen, so daß damit die das plastische Verfestigungsverhalten bestimmenden Materialkennwerte ermittelt werden können.

Aus Fig. 2 geht die gesamte Ausführungsform der Vorrichtung der Erfindung hervor, bei der die Verdrehungsfreiheit der Einspannungen durch Spiegelung des in den Einspannungen fixierten Blechstreifens nach Fig. 1 an zwei Ebenen realisiert gezeigt ist, wobei sich die an den Einspannungen entstehenden Drehmomente gegenseitig kompensieren. Die sich ergebende symmetrische Biegeprobe ist, wie Fig. 2 zeigt, aus zwei identischen, parallel und im Abstand zueinander positionierten Blechstreifen 11 und 12 gebildet, deren Enden 25 und 26 jeweils nicht drehbar starr miteinander verbunden und nur durch die Blechstreifen 11 und 12 gehaltene, frei bewegliche Einspannungen 13 und 14 in Form von Spannbacken eingespannt sind. Letztere sind somit freischwebend gehalten. Außerdem sind die Blechstreifen 11 und 12 jeweils längsmittig zwischen ihren Enden 25 und 26 in einer weiteren Einspannung 15 bzw. 16 getrennt eingespannt. Diese längsmittigen Einspannungen 15 und 16 sind einander gegenüberliegend beabstandet und jeweils starr mit senkrecht zur Blechstreifenoberfläche 10 sowie relativ zueinander zyklisch bewegbaren Halterungen 17 bzw. 18 verbunden.

In Fig. 2 sind die Ausgangslage der Biegeprobe gestrichelt und ihre verformte Lage nach Aufbringung der Kraft F in Richtung der Senkrechten auf die anfängliche Blechstreifenoberfläche 10 und nach relativer Verschiebung der längsmittigen Einspannungen 15 und 16 um die Strecke d in ausgezogenen Linien dargestellt. Die Aufbringung der Verformung in den vier freien Blechabschnitten 20 ist ausschließlich durch axiale Verschiebung der längsmittigen Einspannungen 15 und 16 relativ zueinander bedingt, wobei sich die Biegemomente in den Blechstreifen 11 und 12 infolge der Symmetrie so kompensieren, daß die von den Halterungen 17 und 18 der Biegeprobe aufzunehmenden Haltemomente und seitlichen Haltekräfte nur durch Abweichungen in der Probensymmetrie auftreten und daher gering gehalten werden können.

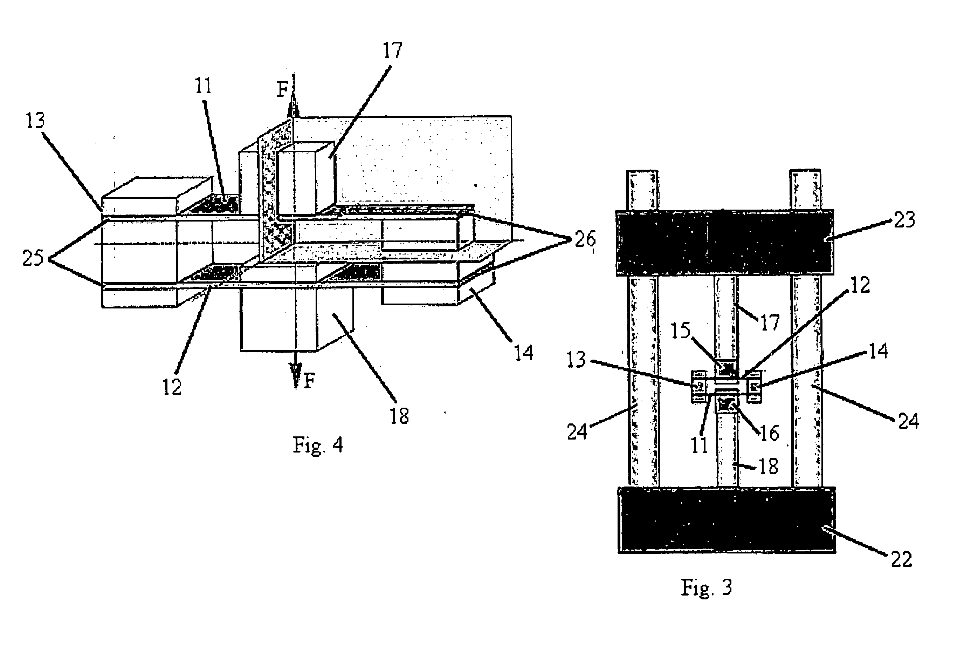

Die relativ zueinander zyklisch bewegbaren Halterungen 17 und 18, mit denen die die Blechstreifen 11 und 12 längsmittig einspannenden und zueinander beabstandeten Einspannungen 13 und 14 der zweifach symmetrischen Biegeprobe starr verbunden sind, können ebenso Teil einer herkömmlichen, in Fig. 3 schematisch dargestellten Zugprüfmaschine 21 sein, wie eine die Zugkraft- bzw. Druckkraftbeaufschlagung der Blechstreifen 11 und 12 sowie deren Verschiebung messende Einrichtung zur Erstellung der Kraft-Verschiebungs-Kurve der Biegeprobe.

Fig. 3 verdeutlicht, daß die längsmittigen Einspannungen 15 und 16 der zweifach symmetrischen Biegeprobe einerseits mit einer Basis 22 des Gestells der Zugprüfmaschine 21 und andererseits mit einem Querhaupt 23 der Zugprüfmaschine starr verbunden sind, das auf vertikal zur Basis 22 angeordneten Führungssäulen 22 und 23 des Gestells der Zugprüfmaschine 21 relativ zur Basis 22 beweglich geführt ist.

Unabhängig von der in Fig. 2 dargestellten Biegeprobe ist ein Rechner zur Simulation des Biegeversuchs und Berechnung der Parameter der Kraft-Verschiebungs-Kurve vorgesehen.

Wie aus Fig. 4 hervorgeht, die eine schematische Perspektivdarstellung der zweifach symmetrischen Biegeprobe in deren Ausgangslage zeigt, muß durch Ausnutzung der Symmetrie die Simulation der Biegeprobe nur für 1/8 der Biegeprobe durchgeführt werden. Dem Rechner werden die Parameter der gemessenen Kraft-Verschiebungs-Kurve eingegeben, die dann vom Rechner mit den von diesem nur für 1/8 der Biegeprobe berechneten Parametern zur Ermittlung verbesserter Materialparameter, d.h. zur Ermittlung der Auswirkung der Verfestigungsparameter abgeglichen werden.

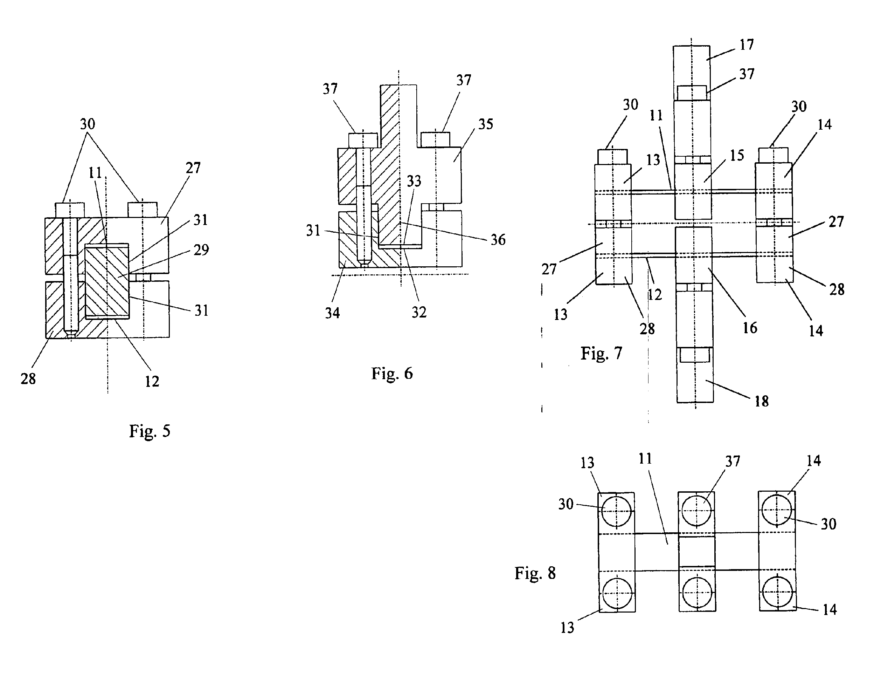

Fig. 5 zeigt im Schnitt eine Ausführungsform einer außenseitigen Einspannung 13 bzw. 14 der einander entsprechenden Enden 25 bzw. 26 der übereinander angeordneten Blechstreifen 11 und 12 der symmetrischen Biegeprobe nach Fig. 2. Die Einspannung 13 bzw. 14 weist ein Oberteil 27 und ein Unterteil 28, die spiegelbildlich gestaltet und im Abstand zueinander angeordnet sind, und ein mindestens teilweise zwischen dem Ober- und dem Unterteil 27 und 28 angeordnetes Zwischenstück 29 auf. Das Oberteil 27 und das Unterteil 28 der Einspannung 13 bzw. 14 sind durch lösbare Stahlbolzen 30 starr verbunden, wobei die einander entsprechenden Enden 25 bzw. 26 der Blechstreifen 11 und 12 jeweils zwischen dem Zwischenstück 29 und dem Oberteil 27 bzw. dem Unterteil 28 positioniert und nicht drehbar eingespannt sind.

Das Oberteil 27 und das Unterteil 28 der frei schwebend gehaltenen Einspannung 13 bzw. 14 weisen jeweils eine - gesehen im Schnitt durch die Mitte der Einspannung 13 bzw. 14 - senkrecht zur Oberfläche 10 der Blechstreifen 11 und 12 der Biegeprobe achsmittig ausgerichtete rechteckförmige Aussparung 31 auf, wobei die entsprechenden U-förmigen Aussparungen 31 einander zugewandt sind und das Zwischenstück 29 der jeweiligen Einspannung 13 bzw. 14 sich in die einander gegenüberliegenden rechteckige Aussparungen 31 derart erstreckt, daß die jeweiligen Enden 25 bzw. 26 der Blechstreifen 11 und 12 der Biegeprobe zwischen dem Boden 32 der entsprechenden rechteckigen Aussparung 31 und der entsprechenden letzterem zugewandten Fläche 33 des jeweiligen Zwischenstücks 29 positioniert und nicht drehbar eingespannt sind. Lösbaren Stahlbolzen 30 erstrecken sich parallel zum Zwischenstück 29 durch die Einspannung 13 bzw. 14 und verbinden die jeweiligen Ober- und Unterteile 27 bzw. 28 der Einspannung 13 bzw. 14 starr miteinander.

Fig. 6 zeigt im Schnitt eine Ausführungsform einer der beiden identischen gestalteten und einander gegenüber beabstandet sowie längsmittig zwischen den Enden 25 und 26 der Blechstreifen 11 und 12 der Biegeprobe nach Fig. 2 angeordneten Einspannungen 15 bzw. 16, die mit den in Fig. 6 nicht dargestellten, relativ zyklisch zueinander bewegbaren Halterungen 17 bzw. 18 starr und lösbar verbunden sind. Jede längsmittige Einspannung 15 bzw. 16 besteht aus zwei übereinander angeordneten Stahlklötzen 34 und 35, von denen jeweils der Stahlklotz 34, der von der entsprechenden Halterung 17 bzw. 18 der Einspannung 15 bzw. 16 entfernt angeordnet ist, identisch wie das Oberteil 27 bzw. das Unterteil 28 der frei schwebend gehaltenen außenseitigen Einspannung 13 bzw. 14 der Biegeprobe nach Fig. 2 ausgebildet ist.
Wie Fig. 6 verdeutlicht, ist der zur entsprechenden Halterung 17 bzw. 18 (Fig. 7) benachbarte Stahlklotz 35 jeder Einspannung 15 bzw. 16 im Schnitt kreuzförmig gestaltet und legt mit einem sich in die rechteckförmige Aussparung 31 des gegenüberliegenden Klotzes 34 erstreckenden Schenkel 36 den Blechstreifen 11 bzw. 12 auf dem Boden 32 der Aussparung 31 fest. Die beiden Stahlklötze 34 und 35 jeder längsmittigen Einspannung 15 bzw. 16 sind durch Stahlbolzen 37 starr miteinander verbunden, so daß der den Blechstreifen 11 bzw. 12 am Boden 32 der rechteckigen Aussparung 31 des Stahlklotzes 34 festlegende Schenkel 36 des im Schnitt kreuzförmigen Stahlklotzes 35 den Blechstreifen 11 bzw. 12 entsprechend der zyklischen Relativbewegung der Halterungen 17 und 18 mit der entsprechenden Zugkraft bzw. Druckkraft beaufschlagt.

Aus den Fig. 7 und 8 geht schematisch die Zueinanderordnung sämtlicher freischwebend gehaltener Einspannungen 13 und 14 und der längsmittigen, mit ihren Halterungen 17 bzw. 18 starr verbundenen Einspannungen 15 und 16 der zweifach symmetrischen Biegeprobe in ihrer unverformten Ausgangslage hervor.

Bezugszeichenliste:
- 1: Blechstreifen
- 2: Ende des Blechstreifens
- 3: Ende des Blechstreifens
- 4: Einspannung
- 5: Einspannung
- 6: Führungsfläche
- 7: Führungsfläche
- 8: Basis
- 9: Basis
- 10: Blechstreifenoberfläche
- 11: Blechstreifen
- 12: Blechstreifen
- 13: Einspannung
- 14: Einspannung
- 15: längsmittige Einspannung
- 16: längsmittige Einspannung
- 17: Halterung
- 18: Halterung
- 20: freier Blechabschnitt
- 21: Zugprüfmaschine
- 22: Basis des Gestells der Zugprüfmaschine
- 23: Querhaupt der Zugprüfmaschine
- 24: Führungssäulen des Querhauptes
- 25: Ende eines Blechstreifens
- 26: Ende eines Blechstreifens
- 27: Oberteil
- 28: Unterteil
- 29: Zwischenstück
- 30: Stahlbolzen
- 31: Aussparung
- 32: Boden der Aussparung
- 33: Fläche des Zwischenstücks
- 34: Stahlklotz
- 35: im Schnitt kreuzförmiger Stahlklotz
- 36: Schenkel des Stahlklotzes 35
- 37: Stahlbolzen
- A, B: Ebenen
- F: Kraft
- d: Verschiebung

## Patentansprüche

1. Verfahren zur Ermittlung des Widerstandes von Blechen gegen Biegung mit wechselnder Belastungsrichtung, wobei eine aus mindestens einem Blechstreifen gebildete Biegeprobe an beiden Enden in Einspannungen fixiert und durch relative Verschiebung der Einspannungen verformt wird, Meßwerte zur Erstellung der entsprechenden Kraft-Verschiebungs-Kurve erfaßt und die Verformung mit einem geeigneten Berechnungsverfahren simuliert wird, so daß die verwendeten Materialparameter anhand der Übereinstimmung von gemessener und gerechneter Kraft-Verschiebungs-Kurve beurteilt werden können,
**dadurch gekennzeichnet, daß**
- die relative Bewegung der Einspannungen der Biegeprobe verdrehungsfrei durch reine Translation in einer von der Probenlängsrichtung und der Senkrechten auf der anfänglichen Blechstreifenoberfläche aufgespannten Ebene erfolgt, indem die relative Verschiebung der Einspannungen senkrecht zur Blechstreifenoberfläche bewirkt wird, ohne daß eine relative Verschiebung der Einspannungen in Probenlängsrichtung behindert wird,
- die Verdrehungsfreiheit der Einspannungen durch Spiegelung des in letzteren fixierten Blechstreifens an zwei Ebenen realisiert wird, wobei sich die an den Einspannungen entstehenden Drehmomente gegenseitig kompensieren und die sich ergebende symmetrische Biegeprobe aus zwei identischen, parallel und im Abstand zueinander positionierten Blechstreifen gebildet wird, wobei die Einspannungen der Enden der beiden Blechstreifen starr miteinander verbunden, ansonsten aber frei schwebend gehalten werden und die Blechstreifen außerdem jeweils längsmittig zwischen ihren Enden getrennt eingespannt und ihre längsmittigen Einspannungen derart gehaltert werden, daß die relative Bewegung senkrecht zur Blechstreifenoberfläche zwischen den Einspannungen aufgebracht wird,
- die in Richtung der Probennormalen vorgeschriebene Bewegung mindestens einmal im Laufe des Verfahrens ihre Richtung ändert und ausreicht, daß zumindest in einem Teil der Biegeprobe plastische Verformung mit mindestens einmal wechselnder Richtung bewirkt wird,
- die relative Verschiebung der Einspannungen und die die relative Verschiebung bewirkende Kraft über die gesamte Verfahrensdauer ohne Unterbrechung während eines Richtungswechsels der Bewegung aufgezeichnet werden,
- die Simulation des Biegeversuchs mit einem Finite-Elemente-Programm durchgeführt wird, indem die im Biegeversuch gemessene Verschiebung in Richtung der Probennormalen aufgebracht und die dafür erforderliche Kraft berechnet und mit der gemessenen Kraft-Verschiebungs-Kurve verglichen wird, und
- die in der Simulation verwendeten Materialkennwerte so variiert werden, daß die gemessene und die berechnete Kraft-Verschiebungs-Kurve annähernd zur Deckung kommen und somit die das plastische Verfestigungsverhalten bestimmenden Materialkennwerte ermittelt werden.

2. Verfahren nach Anspruch 1, **dadurch gekennzeichnet, daß** die Simulation der Biegeprobe nur für 1/8 der Biegeprobe durchgeführt wird.

3. Verfahren nach einem der Ansprüche 1 und 2, **dadurch gekennzeichnet, daß** für die Simulation der Biegeprobe Materialkennwerte verwendet werden, die zuvor mit konventionellen einachsigen Zugversuchen an Blechstreifen nach DIN EN 10002 unter Annahme verschiedener Parameter für die kinematische Verfestigung abgeglichen wurden und dann unter den so bestimmten unterschiedlichen Parametersätzen der beste Parametersatz anhand des Vergleiches zwischen simulierter und gemessener Kraft-Verschiebungs-Kurve an der Biegeprobe ausgewählt wird, so daß eine interative Simulation für den Parameterabgleich entfällt.

4. Verfahren nach Anspruch 1, **dadurch gekennzeichnet, daß** die zyklische Belastung der symmetrischen Biegeprobe über deren längsmittige Einspannungen mittels der herkömmlichen Zugprüfmaschine erfolgt.

5. Vorrichtung zur Ermittlung des Widerstandes von Blechen gegen Biegung mit wechselnder Belastungsrichtung, wobei eine aus mindestens einem Blechstreifen gebildete Biegeprobe an beiden Enden in Einspannungen fixiert und durch relative Verschiebung der Einspannungen verformbar ist, eine Einrichtung zur Erfassung von Meßwerten zur Erstellung der entsprechenden Kraft-Verschiebungs-Kurve und ein Rechner zur Simulierung der Verformung mit einem geeigneten Programm vorgesehen sind, so daß die verwendeten Materialparameter anhand der Übereinstimmung von gemessener und gerechneter Kraft-Verschiebungs-Kurve beurteilbar sind, **gekennzeichnet durch**,
- eine symmetrische Biegeprobe aus zwei identischen, parallel und im Abstand zueinander angeordneten Blechstreifen (11;12), deren Enden (25,26) jeweils nicht drehbar in starr miteinander verbundenen und nur **durch** die Blechstreifen (11;12) gehaltenen Einspanneinrichtungen (13;14) eingespannt sind,
- zwei einander gegenüberliegend beabstandet und längsmittig zwischen den Enden (24, 25) der Blechstreifen (11;12) angeordnete weitere Einspanneinrichtungen (15;16), in denen jeweils einer der Blechstreifen (11 bzw. 12) längsmittig eingespannt ist und die jeweils starr mit senkrecht zur Blechstreifenoberfläche (10) sowie relativ zueinander zyklisch bewegbaren Halterungen (17; 18) verbunden sind,
- wobei die Aufbringung der Verformung in den vier freien Blechabschnitten (20) ausschließlich durch axiale Verschiebung der längsmittigen Einspannungen (15;16) relativ zueinander gegeben ist und sich die Biegemomente in den Blechstreifen (11;12) infolge der Symmetrie so kompensieren, daß die von den Halterungen (17;18) der Biegeprobe aufzunehmenden Haltemomente und seitlichen Haltekräfte nur **durch** Abweichungen in der Probensymmetrie auftreten und daher gering sind,
- eine die Zugkraft- bzw. Druckkraftbeaufschlagung der Blechstreifen (11;12) und deren Verschiebung messende Einrichtung zur Erstellung der Kraft-Verschiebungskurve der Biegeprobe und
- einen unabhängig von der Biegeprobe vorgesehenen Rechner zur Simulation des Biegeversuchs und Berechnung der Parameter der Kraft-Verschiebungs-Kurve für nur 1/8 der Biegeprobe, die vom Rechner mit den diesem eingegebenen Parametern der gemessenen Kraft-Verschiebungs-Kurve zur Ermittlung verbesserter Materialparameter abgleichbar sind.

6. Vorrichtung nach Anspruch 5, **dadurch gekennzeichnet, daß** die relativ zueinander zyklisch bewegbaren Halterungen (17;18), mit denen die die Blechstreifen (11;12) längsmittig einspannenden und zueinander beabstandeten Einspanneinrichtungen (15;16) der zweifach symmetrischen Biegeprobe jeweils starr verbunden sind, sowie die die Kraft und Verschiebung der Biegeprobe messende Einrichtung Teil der herkömmlichen Zugprüfmaschine (21) sind.

7. Vorrichtung nach einem der Ansprüche 5 und 6, **dadurch gekennzeichnet, daß** die freischwebend gehaltenen Einspanneinrichtungen (13;14) der zweifach symmetrischen Biegeprobe, in denen die Enden (25, 26) der übereinander angeordneten Blechstreifen (11;12) beidseits eingespannt sind, jeweils von einem Oberteil (27) und einem Unterteil (28), die spiegelbildlich gestaltet und im Abstand zu einander angeordnet sind, und von einem mindestens teilweise zwischen dem Ober- und dem Unterteil (27 und 28) angeordneten Zwischenstück (29) gebildet sind, und daß das Ober- und das Unterteil (27 und 28) jeder Einspannung (13 bzw. 14) durch lösbare Stahlbolzen (30) starr verbunden sind, wobei die einander entsprechenden Enden (25; 26) der beiden Blechstreifen (11; 12) jeweils zwischen dem Zwischenstück (29) und dem Oberteil (27) bzw. dem Unterteil (28) positioniert und nicht drehbar eingespannt sind.

8. Vorrichtung nach Anspruch 7, **dadurch gekennzeichnet, daß** die spiegelbildlichen gestalteten Ober- und Unterteile (27; 28) der freischwebend gehaltenen Einspannungen (13; 14) der zweifach symmetrischen Biegeprobe jeweils eine - gesehen im Schnitt durch die Mitte der Einspannung (13 bzw. 14) - senkrecht zur Oberfläche (10) der Blechstreifen (11;12) der Biegeprobe achsmittig verlaufende rechteckförmige Aussparung (31) aufweisen, wobei die entsprechenden U-förmigen Aussparungen (31) einander zugewandt sind und das Zwischenstück (29) der jeweiligen Einspannung (13 bzw. 14) sich in die einander gegenüberliegenden rechteckförmige Aussparungen (31) derart erstreckt, daß die jeweiligen Enden 25; 26) der Blechstreifen (11; 12) der Biegeprobe zwischen dem Boden (32) der entsprechenden rechteckförmigen Aussparungen (31) und der entsprechenden letzterem zugewandten Fläche (33) des jeweiligen Zwischenstücks (29) positioniert und nicht drehbar eingespannt sind, wobei die von einander beabstandet angeordneten Ober- und Unterteile (27; 28) jeder Einspannung (13 bzw. 14) durch zwei sich durch letztere parallel zum Zwischenstück (29) der Einspannung (13 bzw. 14) erstreckende lösbare Stahlbolzen (30) starr miteinander verbunden sind.

9. Vorrichtung nach einem der Ansprüche 5 bis 8, **dadurch gekennzeichnet, daß** die die Blechstreifen 11; 12) der zweifach symmetrischen Biegeprobe jeweils längsmittig einspannenden Einspannungen (15; 16) jeweils aus zwei übereinander angeordneten Stahlklötzen (34; 35)) bestehen, von denen jeweils der Stahlklotz (34) jeder Einspannung (15 bzw. 16), der von der entsprechenden Halterung (17 bzw. 18) letzterer entfernt angeordnet ist, identisch wie das Unterteil (28) bzw. das Oberteil (27) der freischwebend gehalterten Einspannungen (13; 14) der Biegeprobe ausgebildet ist, wobei die beiden Stahlklötze (34; 35) durch Stahlbolzen (34) starr miteinander verbundenen sind und der zur zugeordneten Halterung (17 bzw. 18) benachbarte Stahlklotz (35) an letzterer starr und lösbar befestigt ist.

10. Vorrichtung nach Anspruch 9, **dadurch gekennzeichnet, daß** der zur entsprechenden Halterung (17 bzw. 18) entfernt angeordnete Stahlklotz (34) jeder Einspannung - gesehen im Schnitt durch die Mitte der Einspannung (14 bzw. 15) - achsmittig eine rechteckförmige Aussparung (31) aufweist, auf deren Boden (32) der entsprechende Blechstreifen (11 bzw. 12) der zweifach symmetrischen Biegeprobe positioniert und durch einen sich in die rechteckförmige Aussparung (31) erstreckenden Schenkel (36) des im Schnitt kreuzförmigen, zur entsprechenden Halterung (17 bzw. 18) benachbarten Stahlklotzes (35) längsmittig festgelegt derart, daß er von letzterem entsprechend der zyklischen Relativbewegung der Halterungen (17;18) der beiden den jeweiligen Blechstreifen (11 bzw. 12) der Biegeprobe längsmittig einspannenden Einspannungen (15; 16) mit der entsprechenden Zugkraft bzw. Druckkraft beaufschlagbar ist.

## Claims

1. A method for determining the resistance of metal sheets to alternating bending loads, wherein a bending sample made from at least one sheet metal strip is fixed at both ends in clamped supports and deformed by relative displacement of the clamped supports, measurement values for generating the corresponding force-displacement curve are recorded and the deformation is simulated via a suitable calculation method, so that the material parameters used can be evaluated on the basis of the agreement between the measured and the calculated force-displacement curves, **characterised in that**
- the relative movement of the clamped supports securing the bending sample is effected without torsion, by pure translation, in a plane that is extended from the longitudinal direction of the sample and the perpendicular on the initial surface of the sheet metal strip by bringing the relative displacement of the clamped supports to bear perpendicularly to the surface of the metal sheet, without preventing a relative displacement of the clamped supports in the longitudinal direction of the sample,
- the absence of torsion of the clamped supports is achieved by mirroring the sheet metal strip fixed therein on two planes, so that the torsional moments arising at the clamped supports cancel each other out and the symmetrical bending sample resulting therefrom is consists of two identical sheet metal strips that are positioned parallel to one another and with a space therebetween, wherein the clamped supports at the ends of the two metal sheets are fixedly connected to each other, but otherwise supported so as to be freely movable, and each of the metal strips is also clamped separately at its longitudinal centre between its ends, and the clamped supports at the longitudinal centre are braced such that the relative movement is applied perpendicularly to the surface of the sheet metal strip between the clamped supports,
- the preset movement in the perpendiculars to the sample is reversed at least once during the procedure and is sufficient to cause plastic deformation of at least part of the bending sample with at least one reversal of direction,
- the relative displacement of the clamped supports and force creating the relative displacement can be recorded for the entire duration of the procedure without interruption while the direction of movement is being changed,
- the simulation of the bending test is performed with a finite element program by applying the displacement measured in the bending test in the direction of the sample perpendiculars, and the force required therefor is calculated and the compared with the measured force-displacement curve, and
- the material characteristic values used in the simulation can be varied in such manner that the measured and the calculated force-displacement curves approximate one another, so that the material characteristic values that determine the plastic hardening process can be determined.

2. The method as recited in claim 1**, characterised in that** the simulation of the bending sample is carried out for 1/8 of the bending sample.

3. The method as recited in either of claims 1 or 2, **characterised in that** aterial characteristic values that have been previously matched with conventional, uniaxial traction tests on sheet metal strips in accordance with DIN EN 10002 on the basis of various parameters for kinematic hardening are used for the simulation of the bending sample, and the best parameter set is then selected from the various parameter sets thus determined on the basis of the comparison between the simulated and the measured force-displacement curve, so that it is not necessary to carry out an interactive simulation to match the parameters.

4. The method as recited in claim 1, **characterised in that** the cyclical loading of the symmetrical bending sample is performed with the conventional tensile testing machine via the clamped supports at the longitudinal centre thereof.

5. A device for determining the resistance of metal sheets to alternating bending loads, wherein a bending sample made from at least one sheet metal strip is fixed at both ends in clamped supports and is deformable by relative displacement of the clamped supports, a device for recording measurement values to generate the corresponding force-displacement curve and a computer for simulating the deformation with a suitable program are provided, so that the material parameters used are able to be evaluated on the basis of the agreement between the measured and the calculated force-displacement curves, **characterised by**
- a symmetrical bending sample made from two sheet metal strips (11;12) situated parallel to and separate from one another, each of the ends (25, 26) of which are clamped in non-rotatable manner in clamping devices (13;14) that are rigidly connected to each other and only supported by the sheet metal strips (11;12),
- two further clamping devices (15;16), situated opposite and at a distance from each other and in the longitudinal centre between the ends (24, 25) of the sheet metal strips (11;12), in each of which one of the sheet metal strips (11 or 12) is clamped at the longitudinal centre thereof, and of which each is rigidly connected to brackets (17;18) that are movable perpendicularly to the surface of the sheet metal strip (10) and cyclically relative to each other,
- wherein the deformation is created in the four free sheet metal sections (20) exclusively via axial displacement relative to each other of the longitudinally central clamped supports (15;16), and the bending moments in the sheet metal strips (11;12) balance each other out because of their symmetry in such manner that the holding torques to be absorbed by the brackets (17;18) of the bending sample and the lateral holding forces only arise due to deviations in the symmetry of the sample, and are therefore very small,
- a device that measures the tensile or compressive force loading on the sheet metal strips (11;12) and their displacement for plotting the force-displacement curve for the bending sample, and
- a computer that is provided without connection to the bending sample for simulating the bending test and calculating the parameters of the force-displacement curve for only 1/8 of the bending sample, which can be matched by the computer with the parameters of the measured force-displacement curve entered into the computer in order to determine improved material parameters.

6. The device as recited in claim 5, **characterised in that** the brackets (17;18) that are cyclically movable relative to each other, with which each of the clamping devices (15;16) of the doubly symmetrical bending sample that clamp the sheet metal strips (11;12) centrally in the longitudinal extension thereof and with a separation therebetween are rigidly connected, and the device measuring the force and displacement of the bending sample are a component of the conventional tensile test machine (21).

7. The device as recited in claims 5 and 6, **characterised in that** the freely suspended clamping devices (13;14) for the doubly symmetrical bending sample, in which the ends (25, 26) of the sheet metal strips (11;12) are clamped one above the other on both sides, each consist of an upper part (27) and a lower part (28) that are constructed as mirror images and are arranged at a distance from each other, and of an intermediate member (29) that is disposed at least partly between the upper and the lower parts (27 and 28), and that the upper and lower parts (27 and 28) of each clamped support (13 and 14) are rigidly connected via detachable steel bolts (30), wherein the corresponding ends (25;26) of the two sheet metal strips (11;12) are positioned between the intermediate member (29) and the upper part (27) or the lower part (28) and are clamped so as to be non-rotating.

8. The device as recited in claim 7, **characterised in that** the mirror image upper and lower parts (27;28) of the freely suspended clamped supports for the doubly symmetrical bending sample each have a rectangular notch - viewed in cross section through the middle of the clamped support (13 and 14) - extending truly axially and perpendicularly to the surface of the sheet metal strips (11;12) of the bending sample, wherein the corresponding U-shaped recesses (31) face each other and the intermediate member (29) of the respective clamped support (13 and 14) extends into the opposite rectangular recesses (31) such that the respective ends (25;26) of the sheet metal strips (11;12) of the bending sample are positioned between the base (32) of the corresponding rectangular recesses (31) and the corresponding surface (33) of the respective intermediate member (29) that faces these recesses, and clamped in non-rotatable manner, wherein the upper and lower parts (27;28) of each clamped support (13 and 14), which are situated at a distance from one another, are rigidly connected to one another via two detachable steel bolts (30) that extend through these clamped supports parallel to the intermediate member (29) of the clamped supports (13 and 14).

9. The device as recited in any of claims 5 to 8, **characterised in that** the clamped supports (15;16) clamping each of the sheet metal strips (11;12) of the doubly symmetrical bending sample in the longitudinal centre thereof each consist of two steel blocks (34;35) arranged one above the other, of which the steel block of each clamped support (15 and 16) that is arranged at a distance from the corresponding bracket (17 and 18) of the clamped support is identical to the lower part (28) or the upper part (27) of the freely suspended clamped supports (13;14) of the bending sample, wherein both steel blocks are rigidly connected to each other via steel bolts (34), and the steel block (35) adjacent to the associated bracket (17 and 18) is secured rigidly and detachably thereto.

10. The device as recited in claim 9, **characterised in that** the steel block (34) of each clamped support (15 and 16) arranged away from the corresponding bracket (17 and 18) has a rectangular recess (31) positioned axially truly - viewed in cross section through the middle of the clamped support (14 and 15) -, on the base (32) of which the corresponding sheet metal strip (11 and 12) of the doubly symmetrical bending sample is positioned and is fixed longitudinally centrally via a leg (36) of the steel block (35) with cruciform cross section that is adjacent the corresponding bracket (17 and 18), which leg extends into the rectangular recess (31), such that it is able to be loaded by the steel block with the corresponding tensile or compressive force depending on the cyclical relative movement of the brackets (17;18) of the two clamped supports (15; 16) longitudinally centrally clamping the respective sheet metal strip (11 and 12) of the bending sample.

## Revendications

1. Procédé pour la détermination de la résistance de tôle à la flexion avec un sens d'effort alterné, une éprouvette de flexion formée d'au moins une bande de tôle étant fixée aux deux extrémités dans des éléments de serrage et déformable par déplacement relatif des éléments de serrage, des valeurs de mesure étant saisies pour l'établissement de la courbe correspondante force-déplacement et la déformation étant simulée avec un procédé de flexion approprié de sorte que les paramètres de matériau utilisés peuvent être évalués à l'aide de la correspondance entre la courbe calculée force/déplacement et la courbe mesurée,
**caractérisé en ce que**
- le mouvement relatif des éléments de serrage de l'éprouvette de flexion s'effectue sans torsion par simple translation dans un plan s'étendant sur la surface de la bande de tôle initiale en partant du sens longitudinal de l'éprouvette et de la verticale, dans le fait que le déplacement des éléments de serrage est provoqué perpendiculairement à la surface de la bande de tôle sans qu'un déplacement relatif des élément de serrage soit entravé dans le sens longitudinal de l'éprouvette,
- l'absence de torsion des élément de serrage est réalisée par réflexion de la bande de tôle fixée dans ces derniers sur deux plans, les moments de rotation se produisant dans les éléments de serrage se compensant mutuellement et l'éprouvette de flexion symétrique en résultant étant formée de deux bandes de tôles identiques positionnées parallèlement et à distance l'une de l'autre, les élément de serrage des extrémités des deux bandes de tôles étant reliés rigidement entre eux, mais étant maintenus librement suspendus et les bandes de tôle étant serrées séparément entre leurs extrémités respectivement centrées longitudinalement et leurs éléments de serrage centrés longitudinalement étant maintenus de sorte que le mouvement relatif soit appliqué perpendiculairement à la surface de la bande de tôle entre les élément de serrage,
- **en ce que** le mouvement prescrit en direction de la normale d'éprouvette modifie au moins une fois sa direction au cours du procédé et est suffisant pour qu'au moins dans une partie de l'éprouvette de flexion, une déformation plastique se produise avec au moins une fois une direction alternée,
- **en ce que** le déplacement relatif des éléments de serrage et la force provoquant le déplacement relatif sont enregistrés pendant toute la durée du procédé sans interruption pendant un changement de direction du mouvement,
- **en ce que** la simulation du test de flexion est effectuée avec un programme Finite-Elemente dans le fait que le déplacement mesuré dans le test de flexion est appliqué dans le sens de la normale d'éprouvette et la force nécessaire est calculée et est comparée à la courbe mesurée force/déplacement, et
- **en ce que** les valeurs caractéristiques utilisées dans la simulation varient de sorte que la courbe force-déplacement calculée et la courbe mesurée se superposent approximativement et ainsi les valeurs caractéristiques du matériau déterminant le comportement de rigidification plastique sont déterminées.

2. Procédé selon la revendication 1, **caractérisé en ce que** la simulation de l'éprouvette de flexion n'est effectuée que pour 1/8 de l'éprouvette de flexion.

3. Procédé selon l'une des revendications 1 et 2,
**caractérisé en ce que** pour la simulation de l'éprouvette de flexion, il est utilisé des valeurs caractéristiques de matériau qui ont été compensées auparavant avec des essais de traction traditionnels monoaxiaux sur des bandes de tôles selon la norme DIN EN 10002 en supposant différents paramètres de la solidification cinématique et ensuite parmi les différents jeux de paramètres ainsi définis, le meilleur jeu de paramètre est sélectionné à l'aide de la comparaison entre la courbe force-déplacement simulée et la courbe mesurée de sorte qu'une simulation interactive pour la correction des paramètres n'est pas nécessaire.

4. Procédé selon la revendication 1, **caractérisé en ce que** la charge cyclique de l'éprouvette de flexion symétrique par ses éléments de serrage centrés longitudinalement s'effectue au moyen d'une machine d'essai de traction traditionnelle.

5. Dispositif pour la détermination de la résistance de tôle à la flexion avec un sens d'effort alterné, une éprouvette de flexion formée d'au moins une bande de tôle étant fixée aux deux extrémités dans des éléments de serrage et déformable par déplacement relatif des éléments de serrage, un dispositif pour la saisie de valeurs de mesure pour la réalisation de la courbe force-déplacement correspondante et un ordinateur pour la simulation de la déformation avec un programme approprié étant prévus de sorte que les paramètres utilisés de matériau peuvent être analysés en fonction de la concordance de la courbe force-déplacement mesurée et de la courbe calculée,
**caractérisé par**
- une éprouvette de flexion symétrique se composant de deux bandes de tôles (11; 12) identiques et disposées parallèles et à distance l'une de l'autre, dont les extrémités (25, 26) sont serrées respectivement non rotatives dans des dispositifs d'élément de serrage (13; 14) reliés rigidement entre eux et maintenus que par les bandes de tôles (11; 12),
- Deux autres dispositifs d'élément de serrage (15; 16) disposés en opposition mutuelle à distance de manière centrée dans le sens de la longueur entre les extrémités (24, 25) des bandes de tôles (11; 12), dispositifs dans lesquels respectivement l'une des bandes de tôle (11 respectivement 12) est serrée au centre dans le sens de la longueur et qui sont reliés rigidement à des fixations (17; 18) mobiles cycliquement l'une par rapport à l'autre et perpendiculairement à la surface (10) de la bande de tôle,
- l'application de la déformation dans les quatre sections de tôle libres (20) se produisant exclusivement par déplacement axial des éléments de serrage (15; 16) centrés longitudinalement et les moments de flexion étant compensés dans les bandes de tôle (11; 12) en raison de la symétrie, de sorte que les moments de retenue devant être absorbés par les fixations (17; 18) de l'éprouvette de flexion et que des forces de retenue latérales ne se produisent que par des divergences dans la symétrie de l'éprouvette et sont donc faibles,
- un dispositif mesurant l'impact de la force de traction respectivement de la force de pression sur les bandes de tôle (11, 12) et leur déplacement pour la détermination de la courbe force-déplacement de l'éprouvette de flexion et
- un ordinateur prévu indépendamment de l'éprouvette de flexion pour la simulation de l'essai de flexion et le calcul des paramètres de la courbe force-déplacement pour seulement 1/8iéme de l'éprouvette de flexion, paramètres qui peuvent être corrigés par l'ordinateur avec les paramètres de la courbe mesurée force-déplacement qui ont été saisis pour la détermination des paramètres de matériau améliorés.

6. Dispositif selon la revendication 5, **caractérisé en ce que** les fixations (17; 18) mobiles cycliquement l'une par rapport à l'autre auxquelles sont reliés respectivement rigidement les dispositifs d'élément de serrage (15; 16) de l'éprouvette de flexion doublement symétrique, disposés à distance entre eux et serrant de manière centrée longitudinalement les bandes de tôles (11; 12), ainsi que le dispositif mesurant la force et le déplacement de l'éprouvette de flexion font partie de la machine d'essai de traction (21) traditionnelle.

7. Dispositif selon l'une des revendications 5 et 6, **caractérisé en ce que** les dispositifs de serrage (13; 14) maintenus librement suspendus, de l'éprouvette de flexion doublement symétrique, dans lesquels sont serrées de part et d'autre les extrémités (25, 26) des bandes de tôles (11; 12) superposées, sont formés par une partie supérieure (27) et une partie inférieure (28) qui sont réalisées symétriques et qui sont disposées à distance l'une de l'autre et par au moins une pièce intercalaire (29) disposée au moins partiellement entre la partie supérieure et la partie inférieure (27 et 28), et **en ce que** la partie inférieure et la partie supérieure (27, et 28) de chaque élément de serrage (13 respectivement 14) sont reliées rigidement par des boulons en acier amovibles (30), les extrémités correspondantes entre elles (25; 26) des deux bandes de tôles (11; 2) étant positionnées respectivement entre la pièce intercalaire (29) et la partie supérieure (27) respectivement la partie inférieure (28) et montées non rotatives.

8. Dispositif selon la revendication 7, **caractérisé en ce que** les parties inférieures et supérieures (27; 28) des éléments de serrage maintenus librement suspendus (13; 14) de l'éprouvette de flexion doublement symétrique présentent respectivement un évidement (31) rectangulaire s'étendant centré axialement perpendiculairement à la surface (10) des bandes de tôle (11; 12) de l'éprouvette de flexion- vu en coupe par le milieu de l'élément de serrage (13 respectivement 14) -, les évidements correspondants en forme de U (31) étant tournés l'un vers l'autre et la pièce intercalaire (29) de l'élément de serrage respectif (13 respectivement 14) s'étendant dans les évidements (31) rectangulaires et mutuellement opposés de sorte que les extrémités respectives (25; 26) des bandes de tôles (11; 12) de l'éprouvette de flexion sont positionnées entre le fond (32) des évidements rectangulaires correspondantes (31) et la surface correspondante (33,) faisant face au fond, de la pièce intercalaire respective (29) et sont montées non rotatives, les parties supérieures et inférieures (27; 28) disposées à distance réciproque de chaque élément de serrage (13 respectivement 14) étant reliées rigidement entre elles par deux boulons d'acier (30) amovibles s'étendant à travers les éléments de serrage, parallèlement à la pièce intercalaire (29) de l'élément de serrage (13 respectivement 14).

9. Dispositif selon l'une des revendications 5 à 8, **caractérisé en ce que** les éléments de serrage (15; 16) serrant les bandes de tôles (11; 12) de l'éprouvette de flexion doublement symétrique respectivement de manière centrée longitudinalement, se composent respectivement de deux blocs d'acier (34; 35) dont respectivement le bloc d'acier (34), de chaque élément de serrage (15 respectivement 16), lequel est disposé éloigné de la fixation correspondante (17 respectivement 18) de ce dernier, est réalisé de manière identique à la partie inférieure (28) respectivement à la partie supérieure (27) des éléments de serrage maintenus librement suspendus (13; 14) de l'éprouvette de flexion, les deux blocs d'acier (34, 35) étant reliés rigidement entre eux par un boulon d'acier (34) et le bloc d'acier (35) voisin de la fixation associée (17 respectivement 18) étant fixé à cette dernière de manière rigide et amovible.

10. Dispositif selon la revendication 9, **caractérisé en ce que** le bloc d'acier (34) de chaque élément de serrage, bloc qui est disposé éloigné de la fixation correspondante (17 respectivement 18), présente - vu en coupe par le milieu de l'élément de serrage (14 respectivement 15) - centré axialement un évidement rectangulaire (31) au fond (32) duquel est positionnée la bande de tôle correspondante (11 respectivement 12) de l'éprouvette de flexion doublement symétrique et est fixée de manière centrée longitudinalement par une branche (36) s'étendant dans l'évidement (31) rectangulaire, cruciforme vu en coupe, du bloc d'acier (35) voisin de la fixation correspondante (17 respectivement 18), de sorte qu'il peut recevoir la force de traction respectivement de pression correspondante appliquée par le bloc d'acier en fonction du mouvement relatif cyclique des fixations (17; 18) des deux éléments de serrage (15; 16) serrant la bande de tôle respective (11 respectivement 12) de l'éprouvette de flexion de manière centrée longitudinalement.
